# EUROPEAN PATENT APPLICATION

(11) **EP 4 697 257 A1**
(43) Date of publication of application: **18.02.2026**
(21) Application number: 24803031.4
(22) Date of filing: 08.05.2024
(51) Int. Cl.: G06T 3/40

(54) **TERMINAL DEVICE AND IMAGE SUPER-RESOLUTION METHOD**

(30) Priority: 11.05.2023 CN 202310533602
(71) Applicant: Huawei Technologies Co., Ltd., Shenzhen, Guangdong 518129 (CN)
(72) Inventor: LIU, Dekai, Shenzhen, Guangdong 518129 (CN); WANG, Hao, Shenzhen, Guangdong 518129 (CN); CUI, Junqiang, Shenzhen, Guangdong 518129 (CN); HE, Shiming, Shenzhen, Guangdong 518129 (CN); LIU, Yu, Shenzhen, Guangdong 518129 (CN)
(74) Representative: Maiwald GmbH
(86) International application number: PCT/CN2024/091786
(87) International publication number: WO 2024/230751

(57) **Abstract**

This application discloses a terminal device and an image super-resolution method. The terminal device includes: a scheduling module, configured to deliver a plurality of sub-images included in a current frame to a neural-network processing unit NPU, where the current frame is a low-resolution image obtained by performing low-resolution rendering by a graphics processing unit GPU; and the NPU, configured to sequentially perform super-resolution processing on the plurality of sub-images separately in a preset sequence. According to this application, both a high frame rate and low power consumption can be implemented on the terminal device.

## Description

This application claims priority to Chinese Patent Application No. 202310533602.2, filed with the China National Intellectual Property Administration on May 11, 2023 and entitled "TERMINAL DEVICE AND IMAGE SUPER-RESOLUTION METHOD", which is incorporated herein by reference in its entirety.

### TECHNICAL FIELD

This application relates to the field of chip technologies, and in particular, to a terminal device and an image super-resolution method.

### BACKGROUND

An image super-resolution technology (or referred to as an image super resolution technology) is a technology for processing a low-resolution picture rendered by a graphics processing unit (Graphics Processing Unit, GPU) into a high-resolution picture for display. In this method, usually, a low-resolution game picture and some auxiliary information are read, and a conventional interpolation algorithm or a neural network algorithm is used to reconstruct the high-resolution picture. One of application scenarios of the image super-resolution technology is a user game scenario. The image super-resolution technology, for example, a deep learning super-sampling (Deep Learning Super-Sampling, DLSS) technology of NVIDIA and a fidelityfx super resolution (Fidelityfx Super Resolution, FSR) technology of AMD has been widely applied to a personal computer end.

However, an existing neural network based image super-resolution technology has a high requirement on computing power of a GPU and a neural-network processing unit (Neural-Network Processing Unit, NPU), and a user needs to configure a discrete graphics card. Therefore, when the technology is adapted to a terminal device, it is difficult to achieve both a high frame rate (Frame Per Second, FPS) and low power consumption due to computing power limitations of an NPU and a GPU in the terminal device.

### SUMMARY

Embodiments of this application provide a terminal device and an image super-resolution method, so that both a high frame rate and low power consumption can be implemented on a terminal device.

According to a first aspect, this application provides a terminal device. The device includes: a scheduling module, configured to deliver a plurality of sub-images included in a current frame to a neural-network processing unit NPU, where the current frame is a low-resolution image obtained by performing low-resolution rendering by a graphics processing unit GPU; and the NPU, configured to sequentially perform super-resolution processing on the plurality of sub-images separately in a preset sequence.

In terms of technical effects, in this application, a super-resolution processing process of each frame is split into sequential super-resolution processing on all sub-images in the frame (pipeline super-resolution processing). Compared with a super-resolution processing process in the conventional technology in which a frame is used as a unit, in this application, a number of tasks processed by the NPU at a time is greatly reduced. Therefore, the NPU can run at a low frequency. In other words, power consumption of the terminal device can be effectively reduced when a frame rate remains unchanged. In addition, if a running frequency of the NPU is appropriately increased and/or a super-resolution processing algorithm with a proper complexity is selected (that is, an algorithm complexity needs not to be excessively high), a speed of the super-resolution processing process can be increased, so that an effect of high frame rate can be implemented on the terminal device, thereby achieving both a high frame rate and low power consumption, that is, implementing dynamic balance between the frame rate and the power consumption on the terminal device. In other words, according to this application, after the super-resolution technology is applied to the terminal device, effects of both a high frame rate and low power consumption can be implemented.

In a feasible implementation, the scheduling module is further configured to configure a block splitting manner for the current frame and a complexity of a super-resolution processing algorithm. The plurality of sub-images are obtained through block splitting in the block splitting manner, and picture quality of an image obtained through super-resolution processing is related to the complexity of the super-resolution processing algorithm.

A scheduling unit is a hardware module that is independent of the GPU and the CPU and that is in the terminal device, or a hardware module integrated into the GPU or the CPU.

The block splitting manner includes setting of a dimension of a sub-image.

The super-resolution processing algorithm may be configured as different picture quality options provided by a graphics card program on a user interface. For example, a high-quality picture quality option on the user interface corresponds to a complex super-resolution processing algorithm, and a low-quality picture quality option corresponds to a simple super-resolution processing algorithm.

In terms of technical effects, the super-resolution processing process is scheduled by a hardware scheduling unit, to greatly increase efficiency of the super-resolution processing process and reduce a delay. In addition, the block splitting manner is configured to adapt to a size of a cache in the terminal device, to further improve efficiency of super-resolution processing. In addition, super-resolution processing algorithms with different complexities are provided, to meet a picture quality requirement of a user in different scenarios, and have good adaptability.

In a feasible implementation, a high-resolution image corresponding to each sub-image is obtained through super-resolution processing on the sub-image; and the GPU is configured to sequentially perform postprocessing on the high-resolution image corresponding to each sub-image in the preset sequence, to obtain a display image corresponding to each sub-image, where the postprocessing includes a halo effect, motion blur, and a depth effect.

In a feasible implementation, a weight matrix corresponding to each sub-image is obtained through super-resolution processing on the sub-image; and the GPU is further configured to: sequentially fuse each sub-image, a sub-image corresponding to each sub-image in a previous frame, and the weight matrix corresponding to each sub-image, and perform postprocessing on a high-resolution image obtained through fusion, to obtain a display image corresponding to each sub-image, where the postprocessing includes a halo effect, motion blur, and a depth effect.

In terms of technical effects, the GPU performs postprocessing on each sub-image in each frame in a pipeline manner, to adapt to the pipeline super-resolution processing process in the foregoing embodiment. This manner increases processing efficiency of the GPU, and reduces a delay. In addition, a result obtained by using the foregoing super-resolution processing process may be a weight matrix or a high-resolution sub-image. In other words, the block-splitting super-resolution processing process provided in this application can flexibly adapt to different processing procedures, and has good compatibility.

In a feasible implementation, the plurality of sub-images include a first sub-image, and the first sub-image corresponds to a second sub-image in the previous frame. A location of the first sub-image in the current frame is the same as a location of the second sub-image in the previous frame, and the previous frame is a high-resolution image obtained through super-resolution processing and postprocessing.

In terms of technical effects, in the foregoing process of fusing the first sub-image, the second sub-image corresponding to the location of the first sub-image in the previous frame is used, to improve accuracy and picture quality of an image obtained through fusion.

In a feasible implementation, the terminal device further includes a display. The display is configured to sequentially display the display image corresponding to each sub-image in the preset sequence.

In terms of technical effects, the display unit also performs pipeline display, to adapt to the pipeline super-resolution processing process and the pipeline postprocessing process in the foregoing embodiment, so that the current frame is correctly and completely displayed on a display unit, and an entire block-splitting pipeline display process is imperceptible to a user.

In a feasible implementation, the GPU is further configured to perform preprocessing on the current frame before the NPU performs super-resolution processing on the current frame, where the preprocessing includes screen space reflection and screen space ambient occlusion.

In terms of technical effects, for a preprocessing process that cannot be performed through block splitting, in this application, the preprocessing process is adjusted to be performed before super-resolution processing, that is, the preprocessing process is performed before super-resolution processing by using a frame as a unit, so that an image finally displayed on the display unit has a better picture quality effect, and user experience is improved.

In a feasible implementation, after completing low-resolution rendering for the current frame, the GPU starts to perform low-resolution rendering for a next frame, where a priority of the low-resolution rendering is lower than a priority of the postprocessing task.

In terms of technical effects, the GPU is enabled to preferentially perform the postprocessing task (or referred to as postprocessing rendering), continuity of a super-resolution-postprocessing-display process of each sub-image can be effectively improved. It can be learned that although block-splitting super-resolution is performed on the current frame in this solution, a processing process of each sub-image is still fast and continuous, and is imperceptible to the user. In other words, this application effectively ensures visual experience of the user while implementing a high frame rate and low power consumption on the terminal device.

In a feasible implementation, the scheduling module is specifically configured to deliver a first storage address of the first sub-image and a second storage address of the second sub-image to the NPU. The NPU is specifically configured to: separately obtain the first sub-image and the second sub-image based on the first storage address and the second storage address, and perform the super-resolution processing on the first sub-image by using the second sub-image, to obtain a high-resolution image or a weight matrix corresponding to the first sub-image.

In terms of technical effects, the scheduling module allocates storage addresses of data required for super-resolution processing, to increase efficiency of the super-resolution processing process and reduce a latency.

In a feasible implementation, the scheduling module is further configured to deliver an auxiliary parameter corresponding to each sub-image to the NPU, where the auxiliary parameter is used for super-resolution processing on each sub-image, and the auxiliary parameter includes a motion vector map, a depth map, and global luminance information.

In terms of technical effects, in this application, auxiliary information such as a motion vector map is further used in a super-resolution processing process, to improve accuracy of an obtained processing result.

In a feasible implementation, any two adjacent sub-images in the plurality of sub-images partially overlap or do not overlap.

In terms of technical effects, super-resolution processes of the plurality of sub-images obtained through splitting the current frame may be performed in sequence based on locations of the plurality of sub-images in the current frame, or may be performed in another sequence. The flexibility is good. In addition, edges of two adjacent sub-images in the plurality of sub-images obtained through splitting may partially overlap. In a subsequent display process, the two adjacent sub-images are appropriately cropped, to improve a fault tolerance rate of the super-resolution processing process.

In a feasible implementation, the NPU and the GPU are independent processing units, or the NPU is integrated into the GPU.

In terms of technical effects, implementations of the NPU and the GPU in the terminal device are not limited. The flexibility is good.

According to a second aspect, this application provides an image super-resolution method. The method includes: A scheduling module delivers a plurality of sub-images included in a current frame to a neural-network processing unit NPU, where the current frame is a low-resolution image obtained by performing low-resolution rendering by a graphics processing unit GPU; and the NPU sequentially performs super-resolution processing on the plurality of sub-images separately in a preset sequence.

In a feasible implementation, the method further includes: The scheduling module configures a block splitting manner for the current frame and a complexity of a super-resolution processing algorithm. The plurality of sub-images are obtained through block splitting in the block splitting manner, and picture quality of an image obtained through super-resolution processing is related to the complexity of the super-resolution processing algorithm.

In a feasible implementation, a high-resolution image corresponding to each sub-image is obtained through super-resolution processing on the sub-image; and the method further includes: The GPU sequentially performs postprocessing on the high-resolution image corresponding to each sub-image in the preset sequence, to obtain a display image corresponding to each sub-image, where the postprocessing includes a halo effect, motion blur, and a depth effect.

In a feasible implementation, a weight matrix corresponding to each sub-image is obtained through super-resolution processing on the sub-image; and the method further includes:
The GPU sequentially fuses, in the preset sequence, each sub-image, a sub-image corresponding to each sub-image in a previous frame, and the weight matrix corresponding to each sub-image, and performs postprocessing on a high-resolution image obtained through fusion, to obtain a display image corresponding to each sub-image, where the postprocessing includes a halo effect, motion blur, and a depth effect.

In a feasible implementation, the plurality of sub-images include a first sub-image, and the first sub-image corresponds to a second sub-image in the previous frame. A location of the first sub-image in the current frame is the same as a location of the second sub-image in the previous frame, and the previous frame is a high-resolution image obtained through super-resolution processing.

In a feasible implementation, the method further includes: A display sequentially displays the display image corresponding to each sub-image in the preset sequence.

In a feasible implementation, the method further includes: The GPU performs preprocessing on the current frame before the NPU performs super-resolution processing on the current frame, where the preprocessing includes screen space reflection and screen space ambient occlusion.

In a feasible implementation, after completing low-resolution rendering for the current frame, the GPU starts to perform low-resolution rendering for a next frame, where a priority of the low-resolution rendering is lower than a priority of the postprocessing.

In a feasible implementation, the method further includes: The scheduling module delivers an auxiliary parameter corresponding to each sub-image to the NPU, where the auxiliary parameter is used for super-resolution processing on each sub-image, and the auxiliary parameter includes a motion vector map, a depth map, and global luminance information.

In a feasible implementation, any two adjacent sub-images in the plurality of sub-images partially overlap or do not overlap.

In a feasible implementation, the NPU and the GPU are independent processing units, or the NPU is integrated into the GPU.

According to a third aspect, an embodiment of this application provides a chip system. The chip system includes at least one processor, a memory, and an interface circuit, the memory, the interface circuit, and the at least one processor are interconnected through a line, the at least one memory stores instructions, and when the instructions are executed by the processor, the method according to any one of the second aspect is implemented.

According to a fourth aspect, an embodiment of this application provides a computer-readable storage medium. The computer-readable storage medium stores a computer program, and when the computer program is executed, the method according to any one of the second aspect is implemented.

According to a fifth aspect, an embodiment of this application provides a computer program product. The computer program product includes instructions, and when the instructions are executed, the method according to any one of the second aspect is implemented.

### BRIEF DESCRIPTION OF DRAWINGS

The following describes accompanying drawings used in embodiments of this application.
FIG. 1 is a diagram of a structure of a terminal device according to an embodiment of this application;
FIG. 2 shows a specific implementation of a scheduling module according to an embodiment of this application;
FIG. 3a and FIG. 3b are examples of two specific block splitting manners according to an embodiment of this application;
FIG. 4 is a diagram of a structure of another terminal device according to an embodiment of this application;
FIG. 5 is a diagram of a structure of still another terminal device according to an embodiment of this application;
FIG. 6 is a diagram of an execution procedure of modules in a terminal device according to an embodiment of this application;
FIG. 7 is a diagram of a process of obtaining an intermediate result when image super-resolution processing is performed on a current frame according to an embodiment of this application;
FIG. 8 is a diagram of a process of data exchange between modules in a terminal device according to an embodiment of this application;
FIG. 9 is a diagram of a sequence of processing sub-images included in each frame by modules in a terminal device according to an embodiment of this application; and
FIG. 10 is a schematic flowchart of an image super-resolution method according to an embodiment of this application.

### DESCRIPTION OF EMBODIMENTS

The following describes embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device. "Embodiments" mentioned in the specification mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

The following describes technical terms in this application.
(1) Super resolution (Super Resolution) processing: It may also be referred to as super-resolution processing for short. It is a method for restoring a high-resolution image from a low-resolution image or image sequence. Current super-resolution methods include an interpolation-based method, a reconstruction-based method, and a learning-based (namely, deep learning-based) method. A super-resolution processing process in this application uses a deep learning method. A deep learning model for super-resolution processing is not limited in this application.
(2) Cache (Cache): The cache is a layer in a computer memory system, and is located between a main memory and a processor. The cache is added to bridge a processing speed difference between the main memory and the processor. Compared with the main memory, the cache has a higher access speed but a smaller capacity. The cache may usually be divided into a plurality of layers. A layer closer to a CPU has a smaller capacity but a higher access speed.

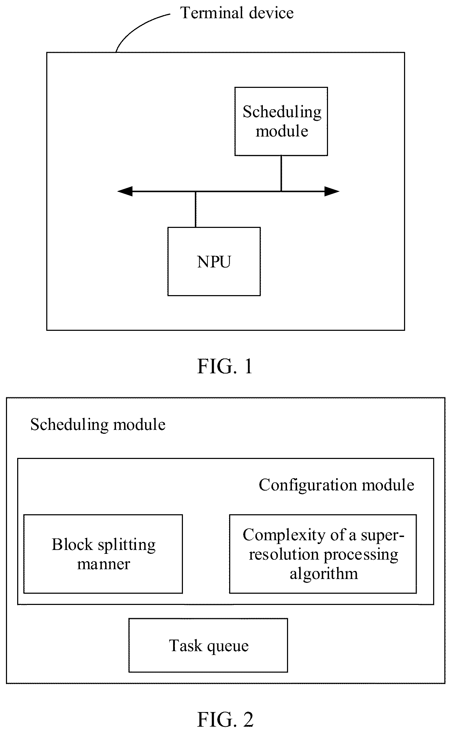

FIG. 1 is a diagram of a structure of a terminal device according to an embodiment of this application. As shown in FIG. 1, the terminal device includes a scheduling module and a neural-network processing unit NPU.

The following describes a process in which the terminal device performs an image super-resolution method with reference to FIG. 1. Details are as follows:
The scheduling module is configured to deliver a plurality of sub-images included in a current frame to the NPU, where the current frame is a low-resolution image obtained by performing low-resolution rendering by a GPU. The NPU sequentially performs super-resolution processing on the plurality of sub-images in a preset sequence.

The scheduling module may be in a hardware form or a software form. When the scheduling module is implemented by using hardware, the scheduling module may be an independent hardware module, or a hardware module integrated into other hardware (for example, a CPU or a GPU). When the scheduling module is implemented by using software, the scheduling module may be in a form of a program, a software thread, or the like in an operating system on the terminal device. This is not limited in this application.

FIG. 2 shows a specific implementation of a scheduling module according to an embodiment of this application.

As shown in FIG. 2, the scheduling module includes a configuration module and a task queue. The configuration module is configured to configure a super-resolution processing parameter, including a block splitting manner for the current frame and a complexity of a super-resolution processing algorithm. In other words, the scheduling module may be configured to configure the block splitting manner for the current frame and the complexity of the super-resolution processing algorithm.

Optionally, the super-resolution processing parameter in the configuration module may be configured by using a game setting option on a user interface or a GPU driver.

After the super-resolution processing parameter is configured, block splitting may be performed on the current frame in the configured block splitting manner, to obtain the plurality of sub-images included in the current frame. In addition, when the NPU subsequently performs super-resolution processing on each sub-image, the NPU invokes the super-resolution processing algorithm configured in the configuration module to perform super-resolution processing.

The complexity of the super-resolution processing algorithm is related to picture quality of an image obtained through super-resolution processing. Optionally, a higher complexity of the super-resolution processing algorithm indicates better picture quality of the image obtained through super-resolution processing.

Further, optionally, super-resolution processing algorithms are classified into three levels: a simple algorithm, a medium algorithm, and a complex algorithm that correspond to three algorithms with different complexities. The user interface includes options of three picture quality: low picture quality, medium picture quality, and high picture quality. The super-resolution processing algorithm corresponding to the low picture quality is simple, the super-resolution processing algorithm corresponding to the medium picture quality is medium, and the super-resolution processing algorithm corresponding to the high picture quality is complex.

Further, optionally, the algorithm used for super-resolution processing is a neural network algorithm.

Optionally, the foregoing block splitting manner is specifically setting of a dimension of each sub-image obtained through block splitting, setting of a shape of each sub-image obtained through block splitting, or the like. This is not limited in this application.

For example, the foregoing block splitting manner may be configured by setting a shape of each sub-image obtained through block splitting to a square.

After the configuration module configures the foregoing super-resolution processing parameter, the scheduling module generates a super-resolution processing task of each sub-image in the current frame in a task queue in a preset sequence based on parameters such as a dimension of each sub-image obtained through block splitting, and sequentially delivers the super-resolution processing task of each sub-image to the GPU based on a ranking in the queue.

Specifically, the following uses a first sub-image in the current frame as an example to describe a process in which the scheduling module delivers a super-resolution processing task to the NPU.

The scheduling module sends a storage address of the first sub-image, a storage address of a second sub-image corresponding to the first sub-image in a previous frame, a storage address of the configured super-resolution processing algorithm, and a storage address of an auxiliary parameter to the NPU.

A location of the first sub-image in the current frame is the same as or close to a location of the second sub-image in the previous frame. The previous frame is a high-resolution image obtained through super-resolution processing or through super-resolution processing and postprocessing.

The first sub-image is any one of the plurality of sub-images in the current frame.

After the NPU receives the super-resolution processing task that is of each sub-image and that is delivered by the scheduling module, the NPU sequentially performs super-resolution processing on each sub-image in a preset sequence. In other words, the NPU performs super-resolution processing on one sub-image each time.

The preset sequence is a sequence of super-resolution processing tasks of sub-images in the task queue in the scheduling module.

The following uses the first sub-image as an example to describe a specific process in which the NPU performs super-resolution processing each time.

The NPU obtains the first sub-image, the second sub-image, the auxiliary parameter, and the configured super-resolution processing algorithm based on the storage addresses sent by the scheduling module, inputs the first sub-image, the second sub-image, and the auxiliary parameter into the algorithm, and performs super-resolution processing on the first sub-image by using the second sub-image.

The auxiliary parameter includes a motion vector map, a depth map, global luminance information, and the like.

Optionally, for each sub-image in the current frame, an auxiliary parameter used when super-resolution processing is performed on the sub-image is a motion vector map, a depth map, global luminance information, and the like of the current frame, or a motion vector map, a depth map, global luminance information, and the like of the sub-image.

Optionally, the terminal device may be a mobile terminal device, for example, a mobile phone, a personal computer, or a tablet. This is not limited in this application.

Optionally, any two of the plurality of sub-images obtained through block splitting on the current frame partially overlap or do not overlap.

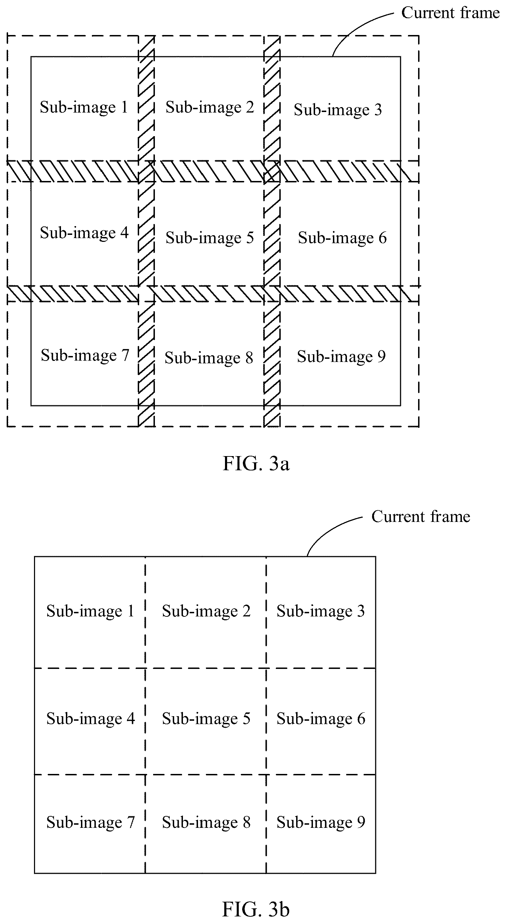

FIG. 3a and FIG. 3b are examples of two specific block splitting manners according to an embodiment of this application.

FIG. 3a is an example of a block splitting manner according to an embodiment of this application. Any two of a plurality of sub-images obtained in the block splitting manner partially overlap. As shown in FIG. 3a, a solid-line border represents a dimension of the current frame, and a dashed-line border represents a dimension of a current frame obtained through block splitting. The current frame is split into nine sub-images (sub-images 1 to 9) through block splitting. A shadow part in FIG. 3a is an overlapping part between adjacent sub-images, so that a part between the solid-line border and the dashed-line border is a padding part. Optionally, a pixel value of each pixel in the padding part may be 0.

The sub-image 1 partially overlaps with the adjacent sub-image 2, sub-image 4, and sub-image 5, and the sub-image 5 partially overlaps with each of the remaining sub-images. An overlapping relationship between the remaining sub-images is not described herein.

FIG. 3b is an example of another block splitting manner according to an embodiment of this application. Any two of a plurality of sub-images obtained in the block splitting manner do not overlap. As shown in FIG. 3b, the current frame is split into nine sub-images in the block splitting manner, and borders of any two adjacent sub-images overlap, and there is no overlapping part in the image.

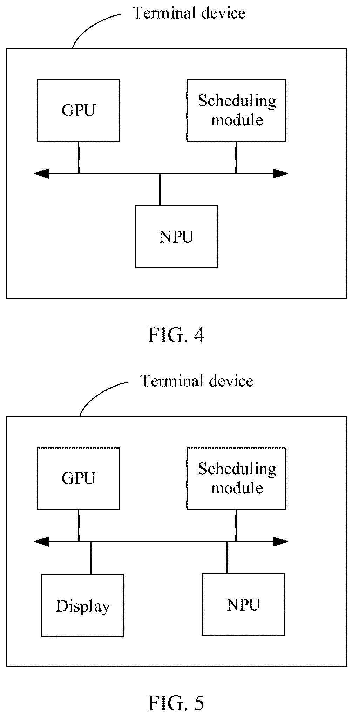

FIG. 4 is a diagram of a structure of another terminal device according to an embodiment of this application, and is used as a supplement to the specific structure of the terminal device shown in FIG. 1. Compared with the terminal device shown in FIG. 1, the terminal device shown in FIG. 4 further includes the GPU. The GPU is configured to continue to process a result obtained by performing super-resolution processing by the NPU.

Specifically, a subsequent processing process of the GPU is specifically divided into two manners based on different results obtained by performing super-resolution processing by the NPU:
(1) When a result obtained through super-resolution processing on each sub-image is a high-resolution image corresponding to the sub-image, the GPU sequentially performs postprocessing on the high-resolution image corresponding to each sub-image in the preset sequence, to obtain a display image corresponding to each sub-image. Specifically, the first sub-image is used as an example. After the NPU completes super-resolution processing on the first sub-image, the GPU starts to perform postprocessing on the first sub-image, to obtain a display image corresponding to the first sub-image.
(2) When a result obtained through super-resolution processing on each sub-image is a weight matrix corresponding to the sub-image, the GPU sequentially performs the following processing on each sub-image in the preset sequence: fusing each sub-image, a sub-image corresponding to each sub-image in a previous frame, and a weight matrix corresponding to each sub-image, to obtain a high-resolution image corresponding to each sub-image; and then performing postprocessing on the high-resolution image corresponding to each sub-image, to obtain a display image corresponding to each sub-image. Specifically, the first sub-image is used as an example. The GPU fuses the first sub-image, the second sub-image, and the weight matrix corresponding to the first sub-image, to obtain a high-resolution image corresponding to the first sub-image, and then performs postprocessing on the high-resolution image corresponding to the first sub-image, to obtain a display image corresponding to the first sub-image.

The postprocessing includes a halo effect, motion blur, and a depth effect.

FIG. 5 is a diagram of a structure of still another terminal device according to an embodiment of this application, and is used as a supplement to the specific structure of the terminal device shown in FIG. 4. Compared with the terminal device shown in FIG. 4, the terminal device shown in FIG. 5 further includes a display.

After the GPU sequentially performs postprocessing on each sub-image to obtain the display image corresponding to each sub-image, the display sequentially displays the display image corresponding to each sub-image.

The terminal device shown in FIG. 1, FIG. 4, and FIG. 5 further includes a storage unit and a buffer unit.

The storage unit is configured to store the current frame, the auxiliary parameter, and the like, and is a memory in the terminal device. Optionally, the storage unit is a dynamic random access memory (Dynamic Random Access Memory, DRAM) or the like.

The buffer unit is configured to store a sub-image on which super-resolution processing is being performed, an auxiliary parameter, and a high-resolution image or a weight matrix obtained through super-resolution processing on a sub-image. The buffer unit is a cache in the terminal device. Optionally, the buffer unit is a static random access memory (Static Random Access Memory, SRAM) or the like.

Optionally, the GPU performs preprocessing on the current frame before the NPU sequentially performs super-resolution processing on sub-images included in the current frame.

Specifically, the GPU performs preprocessing on the current frame as a whole. Optionally, the preprocessing includes screen space reflection and screen space ambient occlusion.

In the foregoing embodiments, after the GPU completes low-resolution rendering for the current frame, the GPU starts to perform low-resolution rendering for a next frame. The low-resolution rendering is performed by frame as a whole.

A priority of the low-resolution rendering in the GPU is lower than a priority of the postprocessing. Specifically, in a process in which the GPU performs low-resolution rendering for the next frame, each time the NPU completes super-resolution processing on one sub-image in the current frame, the GPU pauses low-resolution rendering for the next frame, and starts to perform postprocessing on the sub-image. After the postprocessing is completed, the GPU continues to perform low-resolution rendering for the next frame.

Optionally, the NPU and the GPU in the foregoing embodiments are independent processing units, or the NPU is integrated into the GPU. When the NPU is integrated into the GPU, the processing process of the GPU in the foregoing embodiments is implemented by a part other than the NPU in the GPU.

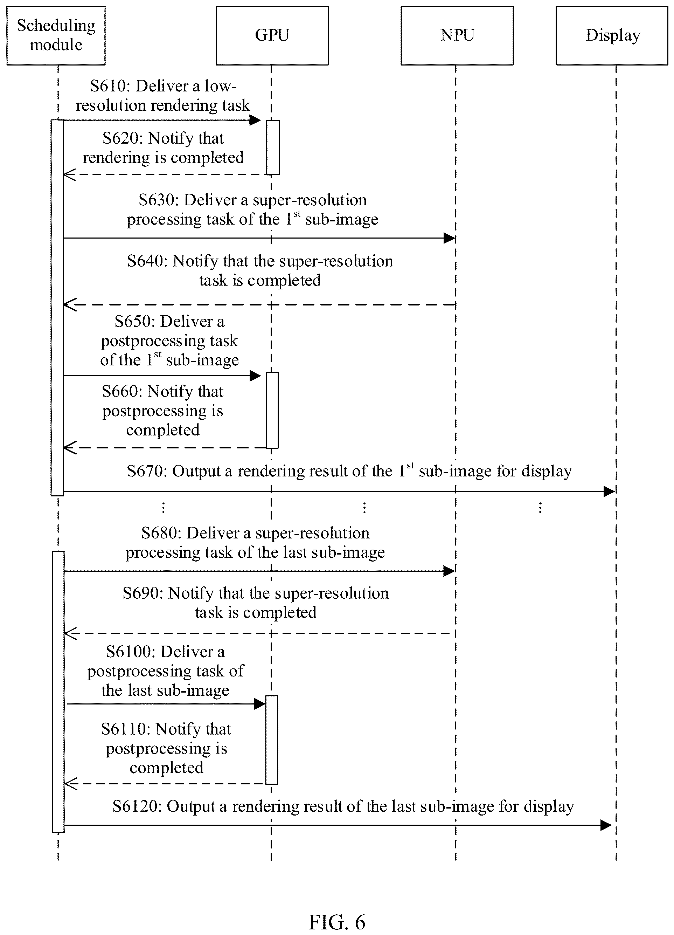

FIG. 6 is a diagram of an execution procedure of modules in a terminal device according to an embodiment of this application. The 1^{st} sub-image and the last sub-image in a current frame are used as an example for description. The 1^{st} sub-image and the last sub-image respectively refer to the 1^{st} sub-image on which super-resolution processing is performed in the current frame and the last sub-image on which super-resolution processing is performed in the current frame.

As shown in FIG. 6, a scheduling module first performs step S610: Deliver a low-resolution rendering task. Specifically, the scheduling module may send a storage address of the current frame to a GPU. After receiving the storage address, the GPU performs low-resolution rendering for the current frame, and after the task is completed, performs step S620: Notify that rendering is completed. After receiving the notification, the scheduling module performs step S630: Deliver a super-resolution processing task of the 1^{st} sub-image. After receiving the task, an NPU starts to perform super-resolution processing on the 1^{st} sub-image, and after completing super-resolution processing on the 1^{st} sub-image, the NPU performs step S640: Notify that the super-resolution task is completed. After receiving the notification, the scheduling module performs step S650: Deliver a postprocessing task of the 1^{st} sub-image. After receiving the task, the GPU starts to perform postprocessing on a super-resolution processing result of the 1^{st} sub-image, and after completing the postprocessing, perform step S660: Notify that postprocessing is completed. After receiving the notification, the scheduling module performs step S670: Output a rendering result of the 1^{st} sub-image for display. The rendering result is the display image in the foregoing embodiments. Then, remaining sub-images are sequentially processed according to the foregoing processing process (step S630 to step S670) of the 1^{st} sub-image. For the last sub-image in the current frame, a processing process of the last sub-image is step S680 to step S6120 in FIG. 6, and is correspondingly the same as the processing process of the first sub-image. Details are not described herein.

Specifically, for a specific execution process of the steps in FIG. 6, refer to the descriptions in the foregoing embodiments. Details are not described herein again.

In addition, a process of preprocessing the current frame and configuring a super-resolution processing parameter in the scheduling module is omitted in the embodiment in FIG. 6. For details, refer to the descriptions in the foregoing embodiments. Details are not described herein again.

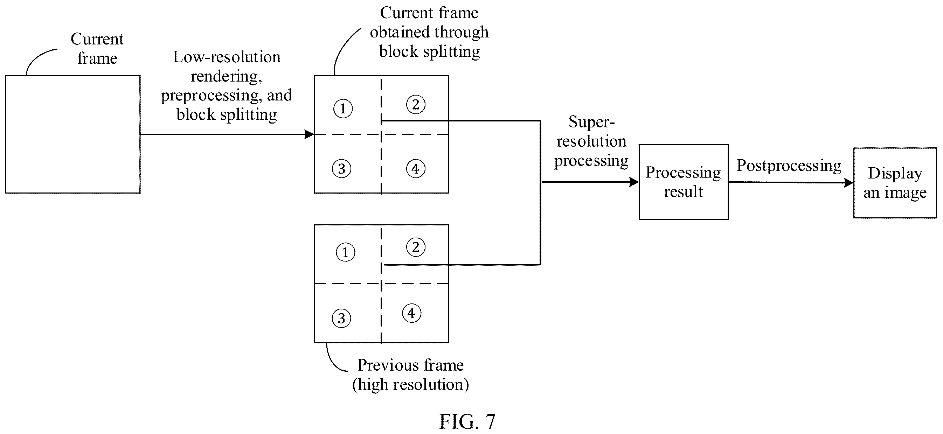

FIG. 7 is a diagram of a process of obtaining an intermediate result when image super-resolution processing is performed on a current frame according to an embodiment of this application.

As shown in FIG. 7, an image super-resolution processing process of the current frame includes the following steps.

First, low-resolution rendering, preprocessing, and block splitting are performed on the current frame, to obtain a current frame (a low-resolution image) obtained through block splitting. As shown in FIG. 7, the current frame obtained through block splitting includes four sub-images (sub-images ① to ④). In FIG. 7, the sub-image ① in the current frame is used as an example to describe a super-resolution processing and postprocessing process of the sub-image ①. Processing processes of other sub-images in the current frame are correspondingly the same as the processing process of the sub-image ①, and therefore are omitted. A previous frame also includes four sub-images, and locations of sub-images with same numbers in the previous frame and the current frame are the same (that is, a location of a sub-image ① in the previous frame is the same as a location of the sub-image ① in the current frame, ..., and a location of a sub-image ④ in the previous frame is the same as a location of the sub-image ④ in the current frame).

The super-resolution processing and postprocessing process of the sub-image ① in the current frame is specifically as follows: Super-resolution processing is performed on the sub-image ① in the current frame by using the sub-image ① in the previous frame, to obtain a processing result (it can be learned from the foregoing embodiments that the processing result is a high-resolution image or a weight matrix corresponding to the sub-image ① in the current frame). Then, a GPU performs postprocessing on the processing result, to obtain a display image corresponding to the sub-image ①, and finally outputs the display image to a display for display.

Specifically, for a specific implementation of the foregoing processing process, refer to the descriptions in the foregoing embodiments. Details are not described herein again.

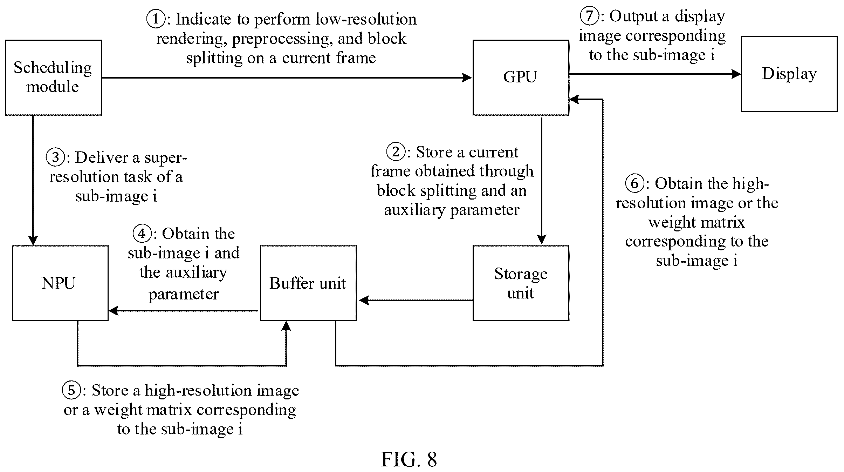

FIG. 8 is a diagram of a process of data exchange between modules in a terminal device according to an embodiment of this application. A current frame and any sub-image i in the current frame are used as an example for description.

As shown in FIG. 8, a scheduling module performs step ①: Indicate to perform low-resolution rendering, preprocessing, and block splitting on the current frame. After receiving the indication, an NPU performs low-resolution rendering, preprocessing, and block splitting on the current frame, to obtain a current frame obtained through block splitting, and performs step ②: Store the current frame obtained through block splitting and an auxiliary parameter. The scheduling module performs step ③: Deliver a super-resolution task of the sub-image i. After receiving the task, the NPU first reads the sub-image i and an auxiliary parameter from a storage unit, stores the sub-image i and the auxiliary parameter in a buffer unit, and then performs step ④: Obtain the sub-image i and the auxiliary parameter. The NPU performs super-resolution processing by using the sub-image i, the auxiliary parameter, and a sub-image (not shown in FIG. 8) corresponding to the sub-image i in a previous frame, to obtain a processing result of the sub-image i (a high-resolution image or a weight matrix corresponding to the sub-image i). The NPU performs step ⑤: Store the high-resolution image or the weight matrix corresponding to the sub-image i. A GPU performs step ⑥: Obtain the high-resolution image or the weight matrix corresponding to the sub-image i. Then, the GPU performs postprocessing on the sub-image i based on the obtained data, to obtain a display image corresponding to the sub-image i, and performs step ⑦: Output the display image corresponding to the sub-image i. Finally, a display displays the display image corresponding to the sub-image i.

Specifically, for a specific implementation process of the foregoing steps, refer to the descriptions in the foregoing embodiments. Details are not described herein again.

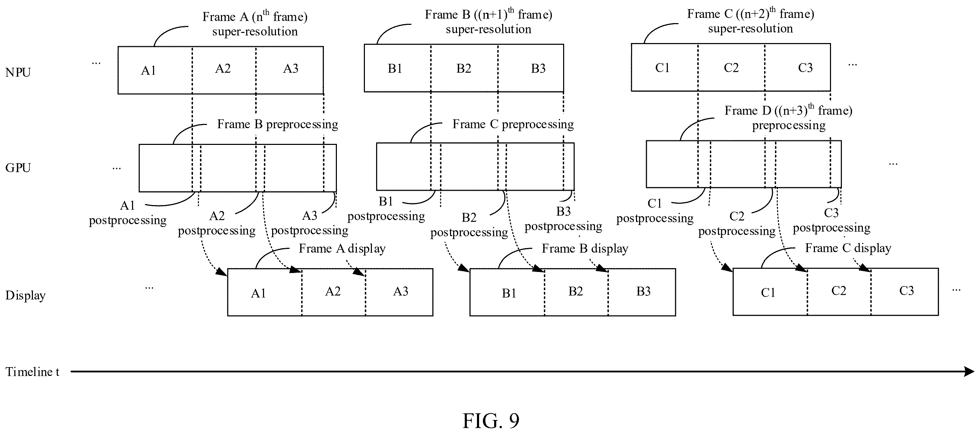

FIG. 9 is a diagram of a sequence of processing sub-images included in each frame by modules in a terminal device according to an embodiment of this application.

FIG. 9 describes a sequence of processing four consecutive frames (namely, a frame A, a frame B, a frame C, and a frame D) in timing by the modules in the terminal device. The frame A, the frame B, the frame C, and the frame D are respectively an n^{th} frame, an (n+1)^{th} frame, an (n+2)^{th} frame, and an (n+3)^{th} frame in timing. Each frame includes three sub-images after block splitting. As shown in FIG. 9, the frame A includes sub-images A1 to A3, the frame B includes sub-images B1 to B3, the frame C includes sub-images C1 to C3, and the frame D includes sub-images D1 to D3.

As shown in FIG. 9, first, an NPU sequentially performs super-resolution processing on the three sub-images included in the frame A. As shown in FIG. 9, a processing sequence is the sub-image A1, the sub-image A2, and the sub-image A3 sequentially. A process of preprocessing the frame A by a GPU is omitted in FIG. 9. When the NPU sequentially performs super-resolution processing on the sub-images A1 to A3, the GPU preprocesses a next frame (namely, the frame B) of the frame A. It can be learned from FIG. 9 that after super-resolution processing on the sub-image A1 ends, the GPU suspends a preprocessing process of the frame B, and starts to perform a postprocessing process of the sub-image A1 (namely, the two processing manners corresponding to different super-resolution processing results in the foregoing embodiments, which are not described herein again). Time required for postprocessing the sub-image A1 is shown by a dashed line in preprocessing timing of the frame B. After postprocessing the sub-image A1 ends, the GPU continues to preprocess the frame B. In addition, as shown in FIG. 9, after postprocessing the sub-image A1 ends, a display starts to display a display image corresponding to the sub-image A1. Similarly, the NPU, the GPU, and the display sequentially perform the foregoing processing process on the sub-image A2 and the sub-image A3 according to the foregoing processing process on the sub-image A1.

As shown in FIG. 9, the foregoing processing process is represented in timing as follows: The NPU sequentially performs super-resolution processing on sub-images in each frame in a preset sequence, the GPU sequentially performs postprocessing on the sub-images in each frame in the preset sequence, and the display sequentially displays display images corresponding to the sub-images in each frame in the preset sequence. For each sub-image, a pipeline processing process from the NPU to the GPU and then to the display is formed. In this manner, workload of the modules in the terminal device is reduced, so that the modules can run at a low frequency, thereby reducing power consumption of the terminal device. In this low-frequency operating manner, if a running frequency of each module is appropriately increased, a processing speed and efficiency of each module can be increased, and an effect of increasing a frame rate can be achieved. In other words, in this application, technical effects of both low power consumption and a high frame rate can be achieved.

After the foregoing processing on the frame A is completed, the modules in the terminal device start to sequentially perform corresponding processing on the frame B, the frame C, and the frame D in timing. For details, refer to FIG. 9. Details are not described herein again.

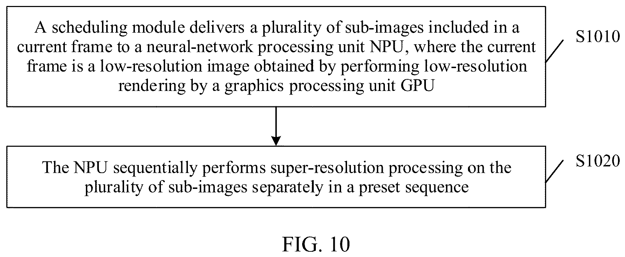

FIG. 10 is a schematic flowchart of an image super-resolution method according to an embodiment of this application. As shown in FIG. 9, the method includes step S1010 and step S1020.

Step S1010: A scheduling module delivers a plurality of sub-images included in a current frame to a neural-network processing unit NPU, where the current frame is a low-resolution image obtained by performing low-resolution rendering by a graphics processing unit GPU.

Step S 1020: The NPU sequentially performs super-resolution processing on the plurality of sub-images separately in a preset sequence.

In a feasible implementation, the method further includes: The scheduling module configures a block splitting manner for the current frame and a complexity of a super-resolution processing algorithm. The plurality of sub-images are obtained through block splitting in the block splitting manner, and picture quality of an image obtained through super-resolution processing is related to the complexity of the super-resolution processing algorithm.

In a feasible implementation, a high-resolution image corresponding to each sub-image is obtained through super-resolution processing on the sub-image; and the method further includes: The GPU sequentially performs postprocessing on the high-resolution image corresponding to each sub-image in the preset sequence, to obtain a display image corresponding to each sub-image, where the postprocessing includes a halo effect, motion blur, and a depth effect.

In a feasible implementation, a weight matrix corresponding to each sub-image is obtained through super-resolution processing on the sub-image; and the method further includes: The GPU sequentially fuses, in the preset sequence, each sub-image, a sub-image corresponding to each sub-image in a previous frame, and the weight matrix corresponding to each sub-image, and performs postprocessing on a high-resolution image obtained through fusion, to obtain a display image corresponding to each sub-image, where the postprocessing includes a halo effect, motion blur, and a depth effect.

In a feasible implementation, the plurality of sub-images include a first sub-image, and the first sub-image corresponds to a second sub-image in the previous frame. A location of the first sub-image in the current frame is the same as a location of the second sub-image in the previous frame, and the previous frame is a high-resolution image obtained through super-resolution processing.

In a feasible implementation, the method further includes: A display sequentially displays the display image corresponding to each sub-image in the preset sequence.

In a feasible implementation, the method further includes: The GPU performs preprocessing on the current frame before the NPU performs super-resolution processing on the current frame, where the preprocessing includes screen space reflection and screen space ambient occlusion.

In a feasible implementation, after completing low-resolution rendering for the current frame, the GPU starts to perform low-resolution rendering for a next frame, where a priority of the low-resolution rendering is lower than a priority of the postprocessing.

In a feasible implementation, the method further includes: The scheduling module delivers an auxiliary parameter corresponding to each sub-image to the NPU, where the auxiliary parameter is used for super-resolution processing on each sub-image, and the auxiliary parameter includes a motion vector map, a depth map, and global luminance information.

In a feasible implementation, any two adjacent sub-images in the plurality of sub-images partially overlap or do not overlap.

In a feasible implementation, the NPU and the GPU are independent processing units, or the NPU is integrated into the GPU.

Specifically, for a specific execution process of the steps in the embodiment in FIG. 10, refer to the descriptions in the foregoing corresponding embodiments. Details are not described herein again.

An embodiment of this application provides a chip system. The chip system includes at least one processor, a memory, and an interface circuit, the memory, the interface circuit, and the at least one processor are interconnected through a line, the at least one memory stores instructions, and when the instructions are executed by the processor, a part or all of the steps recorded in any one of the foregoing image super-resolution method are implemented.

An embodiment of this application provides a computer storage medium. The computer storage medium stores a computer program, and when the computer program is executed, a part or all of the steps recorded in any one of the foregoing image super-resolution method are implemented.

An embodiment of this application provides a computer program product. The computer program product includes instructions, and when the instructions are executed by a processor, a part or all of the steps recorded in any one of the foregoing image super-resolution method are implemented.

In the foregoing embodiments, the description of each embodiment has respective focuses. For a part that is not described in detail in an embodiment, refer to related descriptions in another embodiment. It should be noted that, for ease of description, the foregoing method embodiments are represented as a series of action combinations. However, a person skilled in the art should appreciate that this application is not limited to the described action order, because according to this application, some steps may be performed in another order or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A terminal device, wherein the terminal device comprises:
a scheduling module, configured to deliver a plurality of sub-images comprised in a current frame to a neural-network processing unit NPU, wherein the current frame is a low-resolution image obtained by performing low-resolution rendering by a graphics processing unit GPU; and
the NPU, configured to sequentially perform super-resolution processing on the plurality of sub-images separately in a preset sequence.

2. The device according to claim 1, wherein the scheduling module is further configured to:
configure a block splitting manner for the current frame and a complexity of a super-resolution processing algorithm, wherein
the plurality of sub-images are obtained through block splitting in the block splitting manner, and picture quality of an image obtained through super-resolution processing is related to the complexity of the super-resolution processing algorithm.

3. The device according to claim 1 or 2, wherein a high-resolution image corresponding to each sub-image is obtained through super-resolution processing on the sub-image; and the GPU is configured to:
sequentially perform postprocessing on the high-resolution image corresponding to each sub-image in the preset sequence, to obtain a display image corresponding to each sub-image, wherein
the postprocessing comprises a halo effect, motion blur, and a depth effect.

4. The device according to claim 1 or 2, wherein a weight matrix corresponding to each sub-image is obtained through super-resolution processing on the sub-image; and the GPU is further configured to:
sequentially fuse, in the preset sequence, each sub-image, a sub-image corresponding to each sub-image in a previous frame, and the weight matrix corresponding to each sub-image, and perform postprocessing on a high-resolution image obtained through fusion, to obtain a display image corresponding to each sub-image, wherein
the postprocessing comprises a halo effect, motion blur, and a depth effect.

5. The device according to claim 4, wherein
the plurality of sub-images comprise a first sub-image, and the first sub-image corresponds to a second sub-image in the previous frame; and
a location of the first sub-image in the current frame is the same as a location of the second sub-image in the previous frame, and the previous frame is a high-resolution image obtained through super-resolution processing.

6. The device according to any one of claims 1 to 5, wherein the terminal device further comprises:
a display, configured to sequentially display the display image corresponding to each sub-image in the preset sequence.

7. The device according to any one of claims 1 to 6, wherein the GPU is further configured to:
perform preprocessing on the current frame before the NPU performs super-resolution processing on the current frame, wherein
the preprocessing comprises screen space reflection and screen space ambient occlusion.

8. The device according to any one of claims 3 to 7, wherein
after completing low-resolution rendering for the current frame, the GPU starts to perform low-resolution rendering for a next frame, wherein
a priority of the low-resolution rendering is lower than a priority of the postprocessing.

9. The device according to any one of claims 1 to 8, wherein the scheduling module is further configured to:
deliver an auxiliary parameter corresponding to each sub-image to the NPU, wherein the auxiliary parameter is used for super-resolution processing on each sub-image, and the auxiliary parameter comprises a motion vector map, a depth map, and global luminance information.

10. The device according to any one of claims 1 to 9, wherein
any two adjacent sub-images in the plurality of sub-images partially overlap or do not overlap.

11. The device according to any one of claims 1 to 10, wherein
the NPU and the GPU are independent processing units, or the NPU is integrated into the GPU.

12. An image super-resolution method, wherein the method comprises:
delivering, by a scheduling module, a plurality of sub-images comprised in a current frame to a neural-network processing unit NPU, wherein the current frame is a low-resolution image obtained by performing low-resolution rendering by a graphics processing unit GPU; and
sequentially performing, by the NPU, super-resolution processing on the plurality of sub-images separately in a preset sequence.

13. The method according to claim 12, wherein the method further comprises:
configuring, by the scheduling module, a block splitting manner for the current frame and a complexity of a super-resolution processing algorithm, wherein
the plurality of sub-images are obtained through block splitting in the block splitting manner, and picture quality of an image obtained through super-resolution processing is related to the complexity of the super-resolution processing algorithm.

14. The method according to claim 12 or 13, wherein a high-resolution image corresponding to each sub-image is obtained through super-resolution processing on the sub-image; and the method further comprises:
sequentially performing, by the GPU, postprocessing on the high-resolution image corresponding to each sub-image in the preset sequence, to obtain a display image corresponding to each sub-image, wherein
the postprocessing comprises a halo effect, motion blur, and a depth effect.

15. The method according to claim 12 or 13, wherein a weight matrix corresponding to each sub-image is obtained through super-resolution processing on the sub-image; and the method further comprises:
sequentially fusing, by the GPU in the preset sequence, each sub-image, a sub-image corresponding to each sub-image in a previous frame, and the weight matrix corresponding to each sub-image, and performing postprocessing on a high-resolution image obtained through fusion, to obtain a display image corresponding to each sub-image, wherein
the postprocessing comprises a halo effect, motion blur, and a depth effect.

16. The method according to claim 15, wherein
the plurality of sub-images comprise a first sub-image, and the first sub-image corresponds to a second sub-image in the previous frame; and
a location of the first sub-image in the current frame is the same as a location of the second sub-image in the previous frame, and the previous frame is a high-resolution image obtained through super-resolution processing.

17. The method according to any one of claims 12 to 16, wherein the method further comprises:
sequentially displaying, by a display, the display image corresponding to each sub-image in the preset sequence.

18. The method according to any one of claims 12 to 16, wherein the method further comprises:
performing preprocessing, by the GPU, on the current frame before the NPU performs super-resolution processing on the current frame, wherein
the preprocessing comprises screen space reflection and screen space ambient occlusion.

19. The method according to any one of claims 14 to 18, wherein
after completing low-resolution rendering for the current frame, starting, by the GPU, to perform low-resolution rendering for a next frame, wherein
a priority of the low-resolution rendering is lower than a priority of the postprocessing.

20. The method according to any one of claims 12 to 19, wherein the method further comprises:
delivering, by the scheduling module, an auxiliary parameter corresponding to each sub-image to the NPU, wherein the auxiliary parameter is used for super-resolution processing on each sub-image, and the auxiliary parameter comprises a motion vector map, a depth map, and global luminance information.

21. The method according to any one of claims 12 to 20, wherein
any two adjacent sub-images in the plurality of sub-images partially overlap or do not overlap.

22. The method according to any one of claims 12 to 21, wherein
the NPU and the GPU are independent processing units, or the NPU is integrated into the GPU.

23. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 12 to 22 is implemented.

24. A computer-readable storage medium, wherein the computer-readable storage medium stores a computer program, and when the computer program is executed, the method according to any one of claims 12 to 22 is implemented.

25. A computer program product, wherein the computer program product comprises instructions, and when the instructions are executed, the method according to any one of claims 12 to 22 is implemented.
